# EUROPÄISCHE PATENTSCHRIFT

(11) **EP 4 283 266 B1**
(45) Veröffentlichungstag und Bekanntmachung des Hinweises auf die Patenterteilung: **17.04.2024**
(21) Anmeldenummer: 22175223.1
(22) Anmeldetag: 24.05.2022
(51) Int. Cl.: G01J 3/50, G01J 3/02

(54) **VORRICHTUNG UND VERFAHREN ZUR ERMITTLUNG EINER FARBE EINES GEGENSTANDES**
DEVICE AND METHOD FOR DETERMINING A COLOUR OF AN OBJECT
DISPOSITIF ET PROCÉDÉ DE DÉTERMINATION D'UNE COULEUR D'UN OBJET

(43) Veröffentlichungstag der Anmeldung: 29.11.2023
(73) Patentinhaber: SICK AG, 79183 Waldkirch (DE)
(72) Erfinder: Albrecht, Roland, 79312 Emmendingen (DE); Fischer, Wendelin, 79106 Freiburg (DE); Reichenbach, Hans-Peter, 79286 Glottertal (DE)
(74) Vertreter: Manitz Finsterwald Patent- und Rechtsanwaltspartnerschaft mbB

(56) Entgegenhaltungen:
- EP-A1- 0 522 548
- WO-A1-2004/079314
- DE-A1- 10 143 394
- US-A1- 2007 097 358

## Beschreibung

Die Erfindung betrifft eine Vorrichtung und ein Verfahren zur Ermittlung einer Farbe eines Gegenstands.

Vorrichtungen und Verfahren zur Ermittlung einer Farbe eines Gegenstands sind prinzipiell bekannt. Dabei werden einem Farbsensor verschiedene spektral unterschiedliche Signale zugeführt. Eine spektrale Aufteilung kann dabei senderseitig oder empfängerseitig erfolgen. Bei einer senderseitigen Aufteilung ist der Farbsensor besonders anfällig für Störlicht.

Aus der WO 2004 / 079 314 A1 ist eine Farbmessvorrichtung und ein Farbmessgerät bekannt. Die DE 101 43 394 A1 offenbart ein Verfahren und eine Messanordnung zur Farberkennung.

Es ist daher eine Aufgabe der vorliegenden Erfindung, eine verbesserte Vorrichtung ein verbessertes Verfahren zur Ermittlung einer Farbe eines Gegenstands anzugeben.

Diese Aufgabe wird zunächst gelöst durch eine Vorrichtung zur Ermittlung einer Farbe eines Gegenstands, die in Anspruch 1 definiert wird. Die Vorrichtung umfasst dabei eine Sendeeinheit eine Steuereinheit, eine Empfangseinheit und eine Auswerteeinheit.

Die Sendeeinheit umfasst dabei ein Lichtelement mit einer ersten Lichtquelle, die ausgebildet ist, Licht in einem ersten vordefinierten Wellenlängenbereich zu emittieren, einer zweiten Lichtquelle, die ausgebildet ist, Licht in einem zweiten Wellenlängenbereich, der von dem ersten Wellenlängenbericht verschieden ist, zu emittieren, und einer dritten Lichtquelle, die ausgebildet ist, Licht in einem dritten Wellenlängenbereich, der von dem ersten Wellenlängenbereich und von dem zweiten Wellenlängenbereich verschieden ist, zu emittieren.

Dabei liegen der erste zweite und dritte Wellenlängenbereich insbesondere im Spektrum des sichtbaren Lichts. Insbesondere liegen die drei Wellenlängenbereiche im Bereich rot, grün und blau, weiter insbesondere im Bereich orange-rot, grün-gelb und blau. Dabei können sich die drei Wellenlängenbereich auch teilweise spektral überlappen.

Die erste, zweite und dritte Lichtquelle sind dabei insbesondere als Halbleiterlichtquellen, insbesondere Leuchtdioden ausgebildet. Dabei handelt es sich bei der ersten, zweiten und dritten Lichtquelle insbesondere um Leuchtdioden auf Phosphorbasis, weiter insbesondere um Phosphor-konvertierte Leuchtdioden. Diese weisen eine hohe Spektralbreite bei ausreichender Ansprechzeit auf.

Die Sendeeinheit umfasst auch eine Sendeoptik, die ausgebildet ist, das emittierte Licht von der ersten Lichtquelle, der zweiten Lichtquelle und der dritten Lichtquelle auf einen Gegenstand zu richten. Dazu weist die Sendeeinheit einen oder mehrere Linsen und/oder eine oder mehrere Spiegel auf, die das von den drei Lichtquellen emittierte Licht auf einen Gegenstand richten. Optional umfasst die Sendeoptik auch eine Bündelungsoptik, die die drei Lichtstrahlen von den drei Lichtquellen zu einem Lichtstrahl bündeln.

Die Steuereinheit der Vorrichtung ist ausgebildet, die erste Lichtquelle, die zweite Lichtquelle und die dritte Lichtquelle anzusteuern, und zwar dergestalt, dass die erste Lichtquelle eine erste Pulsgruppe umfassend zumindest zwei aufeinanderfolgende Lichtpulse mit einem vordefinierten Pulsabstand zueinander emittiert, die zweite Lichtquelle eine zweite Pulsgruppe umfassend zumindest zwei aufeinanderfolgende Lichtpulse mit einem vordefinierten Pulsabstand zueinander emittiert und die dritte Lichtquelle eine dritte Pulsgruppe umfassend zumindest zwei aufeinanderfolgende Lichtpulse mit einem vordefinierten Pulsabstand zueinander emittiert.

Insbesondere umfasst die erste Pulsgruppe, die zweite Pulsgruppe und die dritte Pulsgruppe jeweils genau drei aufeinanderfolgende Lichtpulse. Alternativ umfasst die erste Pulsgruppe, die zweite Pulsgruppe und die dritte Pulsgruppe jeweils mehr als drei Lichtpulse, beispielsweise vier, fünf oder zehn Lichtpulse.

Dabei ist die Steuereinheit derart ausgebildet, die erste Pulsgruppe, die zweite Pulsgruppe und die dritte Pulsgruppe so zu emittieren, dass sie in einem (jeweiligen) vordefinierten Gruppenabstand aufeinander folgen.

Die Empfangseinheit der Vorrichtung umfasst ein Empfangselement und eine Empfangsoptik, die ausgebildet ist, von dem Gegenstand remittiertes Licht zu empfangen und auf das Empfangselement zu richten.

Bei dem Empfangselement handelt es sich um einen Sensor, der ausgebildet ist, Licht im Wellenlängenbereich der drei Lichtquellen zu detektieren.

Die Empfangsoptik umfasst dazu eine oder mehrere Linsen und/oder einen oder mehrere Spiegel auf, die das von dem Gegenstand remittierte Licht auf das Empfangselement richten.

Die Auswerteeinheit der Vorrichtung ist ausgebildet, das von dem Empfangselement empfangene Licht durchgängig auszuwerten und so eine Farbe des Gegenstands zu ermitteln. Dazu verwendet die Auswerteeinheit einen Prozessor, wie einen Mikrokontroller. Ebenso kann die Auswerteeinheit einen Analog-Digital-Umsetzer verwenden, der ein analoges Signal des Empfangselement in ein digitales Signal umwandelt. Darüber hinaus kann die Auswerteeinheit einen Verstärker, insbesondere einen Transimpedanzverstärker verwenden, um das empfangene Signal zu verstärken.

Durch die erfindungsgemäße Lösung, insbesondere durch das erfindungsgemäße Pulsmuster wird eine besonders robuste Farberkennung ermöglicht. Insbesondere ist das erfindungsgemäße Pulsmuster unempfindlich gegenüber Störeinflüssen, wie beispielsweise Fremdlicht und ist dennoch besonders genau.

Gemäß einer Ausführungsform verwendet die Auswerteeinheit ein Filter mit endlicher Impulsantwort um die Farbe des Gegenstands zu ermitteln.

Ein Filter mit endlicher Impulsantwort, das auch als FIR-Filter oder Transversalfilter bezeichnet werden kann, ist ein Filter, das eine Impulsantwort mit endlicher Länge erzeugt und so besonders stabil gegenüber Schwingungen ist. Das FIR-Filter ist insbesondere digital ausgebildet.

Insbesondere handelt es sich bei dem FIR-Filter um einen so genannten Nuttall-Filter bzw. einen FIR-Filter der ein Nuttall-Fenster verwendet.

Durch diese Weiterbildung wird eine besonders robuste Erkennung der Farbe ermöglicht.

Gemäß einer Ausführungsform ist das Filter mit endlicher Impulsantwort ein Filter der Ordnung 10 oder größer. Insbesondere handelt es sich bei dem Filter um einen Filter der Ordnung 12. Weiter insbesondere ist die Ordnung des Filters größer oder gleich der Anzahl der Taktzyklen einer Pulsgruppe zuzüglich der doppelten Anzahl von Taktzyklen des Gruppenabstands.

Insbesondere ist die Summe der zwölf Koeffizienten bei einem Filter der Ordnung 12 null. Hierdurch wird eine Hochpasscharakteristik ermöglicht.

Durch diese Weiterbildung ergibt sich eine besonders schnelle Erkennung der Farbe.

Gemäß einer Ausführungsform ist die Steuereinheit weiter ausgebildet, die erste Lichtquelle, die zweite Lichtquelle und die dritte Lichtquelle derart anzusteuern, dass die erste Lichtquelle, die zweite Lichtquelle oder die dritte Lichtquelle eine vierte Pulsgruppe umfassend einen Referenzlichtpuls emittiert, der in einem vordefinierten Gruppenabstand auf die dritte Pulsgruppe folgt.

Der Referenzlichtpuls dient dazu, Helligkeitsschwankungen, die beispielsweise aufgrund von Temperaturschwankungen entstehen, auszugleichen. Dazu kann die Auswerteeinheit insbesondere ausgebildet sein, mithilfe eines Referenzlichtempfängers das von dem Referenzlichtpuls remittierte Licht, insbesondere dessen Leistung, auszuwerten und basierend darauf Helligkeitsschwankungen zu korrigieren. Die vierte Pulsgruppe umfassend den Referenzlichtpuls kann dabei insbesondere nach insgesamt neun Pulsgruppen ohne Referenzlichtpuls emittiert werden.

Beispielsweise werden die drei Lichtquellen derart angesteuert, dass die erste Pulsgruppe in dem ersten Wellenlängenbereich, gefolgt von der zweiten Pulsgruppe in dem zweiten Wellenlängenbereich, gefolgt von der dritten Pulsgruppe in dem dritten Wellenlängenbereich, gefolgt von der ersten Pulsgruppe in dem ersten Wellenlängenbereich, gefolgt von der zweiten Pulsgruppe in dem zweiten Wellenlängenbereich, gefolgt von der dritten Pulsgruppe in dem dritten Wellenlängenbereich, gefolgt von der ersten Pulsgruppe in dem ersten Wellenlängenbereich, gefolgt von der zweiten Pulsgruppe in dem zweiten Wellenlängenbereich, gefolgt von der dritten Pulsgruppe in dem dritten Wellenlängenbereich, gefolgt von der vierten Pulsgruppe mit dem einzelnen Referenzlichtpuls emittiert wird. Es werden somit die erste, zweite und dritte Pulsgruppe jeweils dreimal aufeinanderfolgend wiederholt, bevor die vierte Pulsgruppe emittiert wird.

Hierdurch wird eine noch robustere Vorrichtung bereitgestellt.

Erfindungsgemäß ist der Gruppenabstand drei Taktzyklen, der Pulsabstand einen Taktzyklus und die Pulsdauer ebenfalls einen Taktzyklus lang. Hieraus ergibt sich ein besonders kompaktes Pulsmuster.

Gemäß einer Ausführungsform ist der Taktzyklus zwischen 0,5 µs und 2,0 µs. Insbesondere liegt der Taktzyklus zwischen 1,0µs und 1,5 µs. Weiter insbesondere liegt der Taktzyklus bei 1,33 µs. Dieser Taktzyklus ist besonders vorteilhaft für das erfindungsgemäße Pulsmuster.

Die eingangs genannte Aufgabe wird auch gelöst durch ein in Anspruch 6 definiertes Verfahren zur Ermittlung einer Farbe eines Gegenstands, umfassend die Schritte Ansteuern einer ersten Lichtquelle, um eine erste Pulsgruppe umfassend drei aufeinanderfolgende Lichtpulse mit einem vordefinierten Pulsabstand zueinander zu emittieren, Ansteuern einer zweiten Lichtquelle, um eine zweite Pulsgruppe umfassend drei aufeinanderfolgende Lichtpulse mit einem vordefinierten Pulsabstand zueinander zu emittieren, Ansteuern einer dritte Lichtquelle, um eine dritte Pulsgruppe umfassend drei aufeinanderfolgende Lichtpulse mit einem vordefinierten Pulsabstand zueinander zu emittieren und durchgängiges Auswerten von von einem Gegenstand remittiertem Licht, um eine Farbe des Gegenstands zu ermitteln.

Erfindungsgemäß umfasst das Verfahren weiter ein Ansteuern der ersten Lichtquelle, der zweiten Lichtquelle und der dritten Lichtquelle, sodass zwischen der ersten Pulsgruppe, der zweiten Pulsgruppe und der dritten Pulsgruppe ein vordefinierter Gruppenabstand liegt, in dem keine der drei Lichtquellen Licht emittiert. Bezüglich der Ausgestaltungen und Vorteile des Verfahrens wird auf die zuvor beschriebenen Ausgestaltungen und Vorteile der Vorrichtung verwiesen.

Ausführungsformen einer Vorrichtung und eines Verfahrens zur Ermittlung einer Farbe eines Gegenstands werden nun im Zusammenhang mit den folgenden Figuren erläutert. Es zeigen:
- Fig. 1: eine schematische Ansicht einer Vorrichtung zur Ermittlung einer Farbe eines Gegenstands;
- Fig. 2: ein zeitliches Abfolgediagramm einer Vorrichtung und eines Verfahrens zur Ermittlung einer Farbe eines Gegenstands; und
- Fig. 3: ein Ablaufdiagramm eines Verfahrens zur Ermittlung einer Farbe eines Gegenstands.

Dabei bezeichnen gleich Bezugszeichen gleiche oder ähnliche Merkmale.

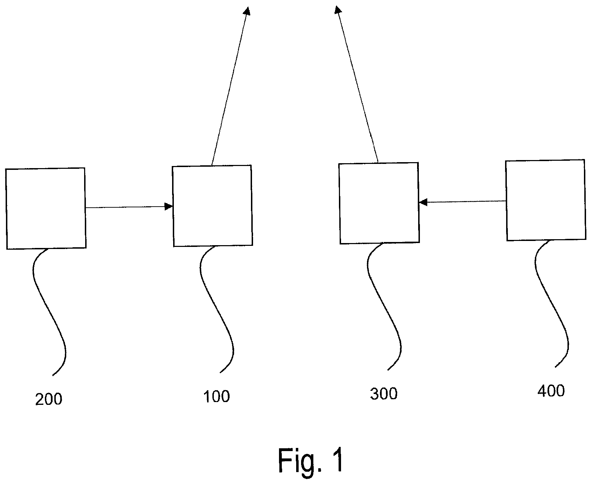

Fig. 1 eine schematische Ansicht einer Vorrichtung 10 zur Ermittlung einer Farbe eines Gegenstands.

Die Vorrichtung 10 umfasst eine Sendeeinheit 100, eine Steuereinheit 200, eine Empfangseinheit 300 und eine Auswerteeinheit 400.

Die Sendeeinheit 100 umfasst dabei ein Lichtelement, umfassend eine erste Lichtquelle, die ausgebildet ist, Licht in einem ersten vordefinierten Wellenlängenbereich zu emittieren, eine zweite Lichtquelle, die ausgebildet ist, Licht in einem zweiten Wellenlängenbereich, der von dem ersten Wellenlängenbericht verschieden ist, zu emittieren, und eine dritte Lichtquelle, die ausgebildet ist, Licht in einem dritten Wellenlängenbereich, der von dem ersten Wellenlängenbereich und von dem zweiten Wellenlängenbereich verschieden ist, zu emittieren.

Die Sendeeinheit 100 umfasst auch eine Sendeoptik, die ausgebildet ist, das emittierte Licht von der ersten Lichtquelle, der zweiten Lichtquelle und der dritten Lichtquelle auf einen Gegenstand zu richten.

Dabei sind das Lichtelement, die erste, zweite und dritte Lichtquelle sowie die Sendeoptik aus Gründen der Übersichtlichkeit nicht abgebildet.

Die Steuereinheit 200 ist ausgebildet, die erste Lichtquelle, die zweite Lichtquelle und die dritte Lichtquelle derart anzusteuern, dass die erste Lichtquelle eine erste Pulsgruppe umfassend zumindest zwei aufeinanderfolgende Lichtpulse mit einem vordefinierten Pulsabstand zueinander emittiert, die zweite Lichtquelle eine zweite Pulsgruppe umfassend zumindest zwei aufeinanderfolgende Lichtpulse mit einem vordefinierten Pulsabstand zueinander emittiert und die dritte Lichtquelle eine dritte Pulsgruppe umfassend zumindest zwei aufeinanderfolgende Lichtpulse mit einem vordefinierten Pulsabstand zueinander emittiert, wobei die erste Pulsgruppe, die zweite Pulsgruppe und die dritte Pulsgruppe in zumindest einem vordefinierten Gruppenabstand aufeinander folgen.

Die Empfangseinheit 300 umfasst ein Empfangselement und eine Empfangsoptik, die ausgebildet ist, von dem Gegenstand remittiertes Licht zu empfangen und auf das Empfangselement zu richten, wobei das Empfangselement und die Empfangsoptik aus Gründen der Übersichtlichkeit nicht abgebildet sind.

Die Auswerteeinheit 400 ist ausgebildet, von dem Empfangselement empfangenes Licht auszuwerten und eine Farbe des Gegenstands zu ermitteln.

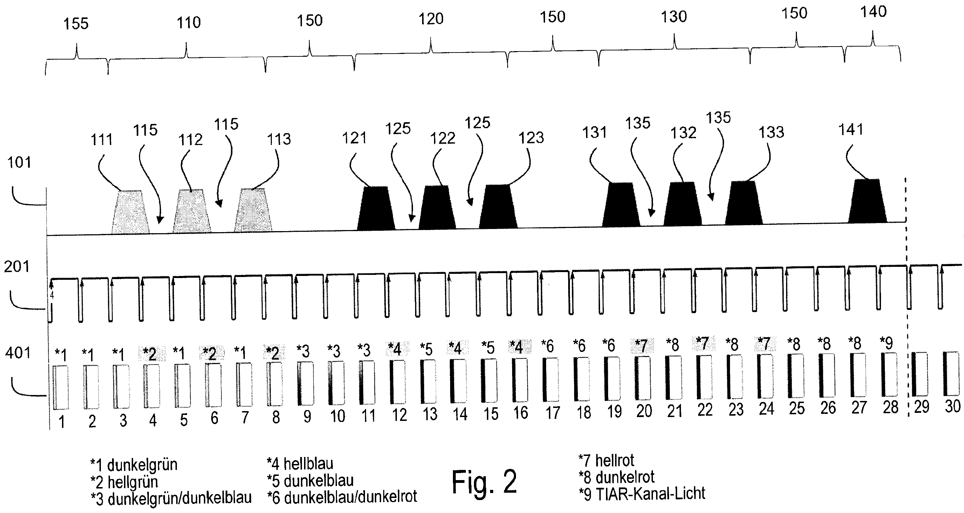

Die Funktionen der Steuereinheit 200 und der Auswerteeinheit 400 werden im Zusammenhang mit der folgenden Fig. 2 beschrieben.

Fig. 2 zeigt ein zeitliches Abfolgediagramm einer Vorrichtung und eines Verfahrens zur Ermittlung einer Farbe eines Gegenstands.

Dabei ist auf der Rechtsachse die Zeit aufgetragen und auf der Hochachse, von oben nach unten, in der ersten Zeile 101 ein zeitlicher Ablauf der emittierten Lichtpulse, in der zweiten Zeile 201 ein zeitlicher Ablauf eines Taktes eines Taktgebers und in der dritten Zeile 401 ein zeitlicher Ablauf eines an der Auswerteeinheit empfangenen Signals aufgetragen.

Die in Fig. 1 beschriebene Steuereinheit steuert die erste Lichtquelle an, sodass diese einen ersten Lichtpuls 111, einen zweiten Lichtpuls 112 und einen dritten Lichtpuls 113 in einer ersten vordefinierten Wellenlänge emittiert, welche in diesem Beispiel grün ist.

Zwischen dem ersten Lichtpuls 111 und dem zweiten Lichtpuls 112 besteht ein Pulsabstand 115 und zwischen dem zweiten Lichtpuls 112 und dem dritten Lichtpuls 113 besteht ebenfalls ein Pulsabstand 115, der gleich dem Pulsabstand 115 zwischen dem ersten und zweiten Lichtpuls 111 und 112 ist. Diese drei Lichtpulse 111, 112 und 113 bilden eine erste Pulsgruppe 110.

Die Steuereinheit steuert die zweite Lichtquelle an, sodass diese einen ersten Lichtpuls 121, einen zweiten Lichtpuls 122 und einen dritten Lichtpuls 123 in einer zweiten vordefinierten Wellenlänge emittiert, welche in diesem Beispiel blau ist.

Zwischen dem ersten Lichtpuls 121 und dem zweiten Lichtpuls 122 besteht ein Pulsabstand 125 und zwischen dem zweiten Lichtpuls 122 und dem dritten Lichtpuls 123 besteht ebenfalls ein Pulsabstand 125, der gleich dem Pulsabstand 125 zwischen dem ersten und zweiten Lichtpuls 121 und 122 ist. Diese drei Lichtpulse 121, 122 und 123 bilden eine zweite Pulsgruppe 120.

Die Steuereinheit steuert die dritte Lichtquelle an, sodass diese einen ersten Lichtpuls 131, einen zweiten Lichtpuls 132 und einen dritten Lichtpuls 133 in einer zweiten vordefinierten Wellenlänge emittiert, welche in diesem Beispiel rot ist.

Zwischen dem ersten Lichtpuls 131 und dem zweiten Lichtpuls 132 besteht ein Pulsabstand 135 und zwischen dem zweiten Lichtpuls 132 und dem dritten Lichtpuls 133 besteht ebenfalls ein Pulsabstand 135, der gleich dem Pulsabstand 135 zwischen dem ersten und zweiten Lichtpuls 131 und 132 ist. Diese drei Lichtpulse 131, 132 und 133 bilden eine dritte Pulsgruppe 130.

Die Steuereinheit steuert die erste, zweite oder dritte Lichtquelle an, sodass eine von der ersten, zweiten oder dritten Lichtquelle einen Referenzlichtpuls 141 emittiert, der eine vierte Pulsgruppe 140 bildet. Dabei kann der Referenzlichtpuls 141 alternativ auch entfallen.

Die Steuereinheit steuert dabei die erste Lichtquelle, die zweite Lichtquelle und die dritte Lichtquelle so an, dass zwischen der ersten Pulsgruppe 110 und der zweiten Pulsgruppe 120 ein vordefinierter Gruppenabstand 150 liegt, dass zwischen der zweiten Pulsgruppe 120 und der dritten Pulsgruppe 130 ein vordefinierter Gruppenabstand 150 liegt und dass zwischen der dritten Pulsgruppe 130 und der vierten Pulsgruppe 140 ein vordefinierter Gruppenabstand 150 liegt. Die Gruppenabstände 150 zwischen der ersten Pulsgruppe 110, der zweiten Pulsgruppe 120, der dritten Pulsgruppe 130 und der vierten Pulsgruppe 140 sind dabei gleich groß. In diesen Gruppenabständen 150 wird kein Licht emittiert. Vor der Ansteuerung der ersten Lichtquelle, d.h. vor der Emission der ersten Pulsgruppe 110 liegt ein Startabstand 155. In diesem Startabstand 155 wird ebenfalls kein Licht emittiert. Der Startabstand kann dabei gleich dem Gruppenabstand 150 sein.

Wie in Zeile 201 gezeigt ist, bestimmt der Takt des Taktgebers sowohl die Steuereinheit und damit die Emission der Lichtpulse, als auch der Auswertungseinheit und damit die Abtastung des Empfangselements. Dabei folgen zunächst drei Taktzyklen 1, 2 und 3, in denen kein Licht emittiert wird, gefolgt von einem Taktzyklus 4, in dem der erste grüne Lichtpuls 111 emittiert wird, gefolgt von einem Taktzyklus 5, in dem kein Lichtpuls emittiert wird, gefolgt von einem Taktzyklus 6, in dem der zweite gründe Lichtpuls 112 emittiert wird, gefolgt von einem Taktzyklus 7, in dem kein Lichtpuls emittiert wird, gefolgt von einem Taktzyklus 8, in dem der dritte gründe Lichtpuls emittiert wird. Hierauf folgen drei Taktzyklen 9, 10 und 11, in denen kein Licht emittiert wird. Diese drei Taktzyklen 9, 10 und 11 stellen gleichzeitig den Gruppenabstand 150 zwischen der ersten Pulsgruppe 110 und der zweiten Pulsgruppe 120 dar und das Emissionsschema wiederholt sich für die drei blauen Lichtpulse 121, 122, 123 und dann erneut für die drei roten Lichtpulse 131, 132, 133. An die drei roten Lichtpulse schließt sich erneut ein Gruppenabstand 150 von drei Taktzyklen 25, 26, 27 an und im 28. Taktzyklus emittiert die erste, zweite oder dritte Lichtquelle die vierte Pulsgruppe.

Nach dem 28. Takt wiederholt sich das Taktschema von vorne. Es kann dabei insbesondere nach dem 28. Takt unmittelbar von vorne starten. Alternativ kann eine beliebig lange Pause erfolgen, bevor das Taktschema erneut von vorne beginnt. Dabei variiert bei der Wiederholung des Taktschemas die Farbe der vierten Pulsgruppe abwechselnd bzw. nacheinander in der Farbe der ersten, zweiten oder dritten Lichtquelle. Wenn beispielsweise in dem in Fig. 2 gezeigten Beispiel die vierte Pulsgruppe in grün emittiert wird, wird im nächsten Taktschema die vierte Pulsgruppe in blau emittiert und in dem darauffolgenden Taktschema in rot. Der Taktzyklus beträgt dabei zwischen 0,5 µs und 2,0 µs, insbesondere 1,3 µs.

Die dritte Zeile 401 zeigt dabei, was die Auswerteeinheit empfängt. Dabei ist ersichtlich, dass die Auswerteeinheit zunächst drei Taktzyklen 1, 2, 3 ein Signal ohne Einfluss der Sendeeinheit, ein sogenanntes Hintergrundsignal empfängt, gefolgt von einem Taktzyklus 4, in dem sie ein grün empfängt, gefolgt von einem Taktzyklus 5, in dem sie lediglich das Hintergrundsignal empfängt, gefolgt von einem Taktzyklus 6, in dem sie ein grün empfängt, gefolgt von einem Taktzyklus 7, in dem sie lediglich das Hintergrundsignal empfängt, gefolgt von einem Taktzyklus 8, in dem sie ein grün empfängt.

Hierauf folgen drei Taktzyklen 9, 10, 11, in dem die Auswerteeinheit lediglich das Hintergrundsignal empfängt, gefolgt von fünf Taktzyklen 12, 13, 14, 15, 16, in dem sich ein blau und das Hintergrundsignal abwechseln. Dies wiederholt sich sodann für weitere elf Taktzyklen 17 bis 27 für die Farbe rot, gefolgt von einem letzten, 28. Taktzyklus, in dem die Auswerteeinheit diejenige Farbe empfängt, die die eine von den drei Leuchtquellen emittiert.

Die Taktzyklen 1, 2, 3 stellen dabei den Startabstand 155 dar, die Taktzyklen 4 bis 8 die erste Pulsgruppe 110, die Taktzyklen 9 bis 11 den Gruppenabstand 150, die Taktzyklen 12 bis 16 die zweite Pulsgruppe 120, die Taktzyklen 17 bis 19 den Gruppenabstand 150, die Taktzyklen 20 bis 24 die dritte Pulsgruppe 130, die Taktzyklen 25 bis 27 den Gruppenabstand 150 und der Taktzyklus 28 die vierte Pulsgruppe.

Auf Basis dieses Taktschemas ist die Auswerteeinheit ausgebildet, die Farbe des Gegenstands besonders gut zu ermitteln.

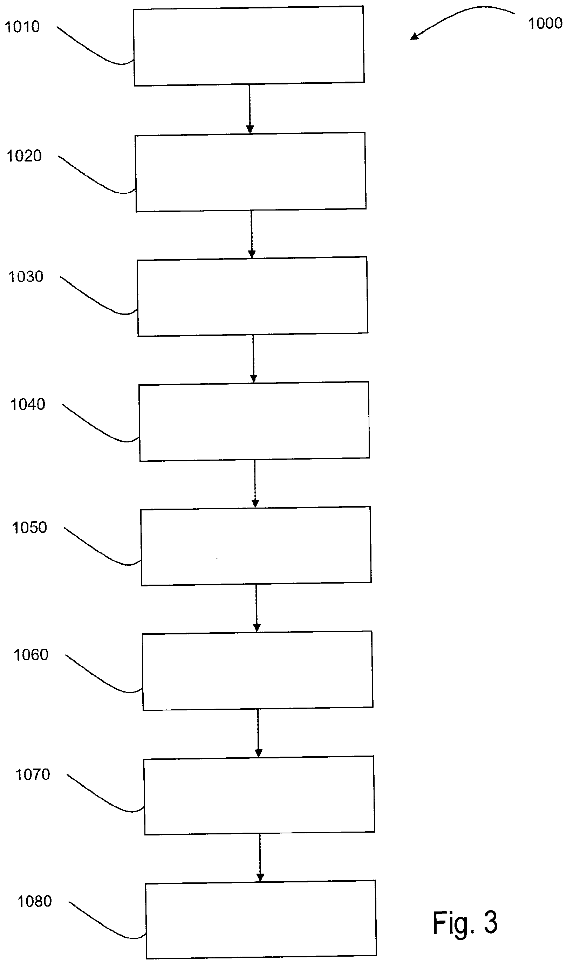

Fig. 3 zeigt ein Ablaufdiagramm eines Verfahrens 1000 zur Ermittlung einer Farbe eines Gegenstands.

Das Verfahren 1000 beginnt in einem ersten Schritt 1010 in dem eine erste Lichtquelle angesteuert wird, um eine erste Pulsgruppe umfassend drei aufeinanderfolgende Lichtpulse mit einem vordefinierten Pulsabstand zueinander zu emittieren, die auf einen Gegenstand gerichtet sind.

In einem weiteren Schritt 1020 folgt ein vordefinierter Gruppenabstand, in dem keine Lichtpulse emittiert werden.

In einem nächsten Schritt 1030 wird eine zweite Lichtquelle angesteuert um eine zweite Pulsgruppe umfassend drei aufeinanderfolgende Lichtpulse mit einem vordefinierten Pulsabstand zueinander zu emittieren, die auf den Gegenstand gerichtet sind.

In einem weiteren Schritt 1040 folgt ein vordefinierter Gruppenabstand, in dem keine Lichtpulse emittiert werden.

In einem nächsten Schritt 1050 wird eine dritte Lichtquelle angesteuert um eine dritte Pulsgruppe umfassend drei aufeinanderfolgende Lichtpulse mit einem vordefinierten Pulsabstand zueinander zu emittieren, die auf den Gegenstand gerichtet sind.

In einem weiteren Schritt 1060 folgt ein vordefinierter Gruppenabstand, in dem keine Lichtpulse emittiert werden.

In einem nächsten Schritt 1070 wird die erste, zweite oder dritte Lichtquelle angesteuert um eine vierte Pulsgruppe umfassend einen Lichtpuls zu emittieren, der auf den Gegenstand gerichtet ist.

In einem weiteren Schritt 1080 wird das von einem Gegenstand remittierte Licht ausgewertet um eine Farbe des Gegenstands zu ermitteln.

Dabei erfolgt insbesondere der Schritt 1080 durchgängig bzw. dauerhaft um jeden einzelnen emittierten Lichtpuls auszuwerten.

Der Schritt 1070 kann dabei insbesondere optional erfolgen. Beispielsweise erfolgt das Verfahren derart, dass sich die Schritte 1010 bis 1060 zwei, drei oder mehrmals wiederholen, bevor der Schritt 1070 ein einziges Mal erfolgt.

Vor dem ersten Schritt 1010 kann, insbesondere einmalig, ein weiterer, nicht gezeigter Schritt erfolgen, in dem in einem vordefinierten Startabstand keine Lichtpulse emittiert werden.

### Bezugszeichenliste

- 10: Vorrichtung
- 100: Sendeeinheit
- 101: Zeile
- 110: erste Pulsgruppe
- 111: erster Lichtpuls
- 112: zweiter Lichtpuls
- 113: dritter Lichtpuls
- 115: Pulsabstand
- 120: zweite Pulsgruppe
- 121: erster Lichtpuls
- 122: zweiter Lichtpuls
- 123: dritter Lichtpuls
- 125: Pulsabstand
- 130: dritte Pulsgruppe
- 131: erster Lichtpuls
- 132: zweiter Lichtpuls
- 133: dritter Lichtpuls
- 135: Pulsabstand
- 140: vierte Pulsgruppe
- 141: Referenzlichtpuls
- 150: Gruppenabstand
- 155: Startabstand
- 200: Steuereinheit
- 201: Zeile
- 300: Empfangseinheit
- 400: Auswerteeinheit
- 401: Zeile
- 1000: Verfahren
- 1010: Verfahrensschritt
- 1020: Verfahrensschritt
- 1030: Verfahrensschritt
- 1040: Verfahrensschritt
- 1050: Verfahrensschritt
- 1060: Verfahrensschritt
- 1070: Verfahrensschritt
- 1080: Verfahrensschritt

## Patentansprüche

1. Vorrichtung (10) zur Ermittlung einer Farbe eines Gegenstands, umfassend:
- eine Sendeeinheit (100), umfassend:
- ein Lichtelement, umfassend
- eine erste Lichtquelle, die ausgebildet ist, Licht in einem ersten vordefinierten Wellenlängenbereich zu emittieren,
- eine zweite Lichtquelle, die ausgebildet ist, Licht in einem zweiten Wellenlängenbereich, der von dem ersten Wellenlängenbericht verschieden ist, zu emittieren, und
- eine dritte Lichtquelle, die ausgebildet ist, Licht in einem dritten Wellenlängenbereich, der von dem ersten Wellenlängenbereich und von dem zweiten Wellenlängenbereich verschieden ist, zu emittieren; und
- eine Sendeoptik, die ausgebildet ist, das emittierte Licht von der ersten Lichtquelle, der zweiten Lichtquelle und der dritten Lichtquelle auf einen Gegenstand zu richten;
- eine Steuereinheit (200), die ausgebildet ist, die erste Lichtquelle, die zweite Lichtquelle und die dritte Lichtquelle derart anzusteuern, dass die erste Lichtquelle eine erste Pulsgruppe (110) umfassend mindestens zwei aufeinanderfolgende Lichtpulse (111, 112) mit einem vordefinierten Pulsabstand (115) zueinander emittiert, die zweite Lichtquelle eine zweite Pulsgruppe (120) umfassend mindestens zwei aufeinanderfolgende Lichtpulse (121, 122) mit einem vordefinierten Pulsabstand (125) zueinander emittiert und die dritte Lichtquelle eine dritte Pulsgruppe (130) umfassend mindestens zwei aufeinanderfolgende Lichtpulse (131, 132) mit einem vordefinierten Pulsabstand (135) zueinander emittiert, wobei die erste Pulsgruppe (110), die zweite Pulsgruppe (120) und die dritte Pulsgruppe (130) in zumindest einem vordefinierten Gruppenabstand (150) aufeinander folgen und in dem vordefinierten Gruppenabstand keine der drei Lichtquellen Licht emittiert, wobei der Gruppenabstand drei Taktzyklen beträgt, der Pulsabstand einen Taktzyklus beträgt und die Pulsdauer einen Taktzyklus beträgt;
- eine Empfangseinheit (300), umfassend
- ein Empfangselement; und
- eine Empfangsoptik, die ausgebildet ist, von dem Gegenstand remittiertes Licht zu empfangen und auf das Empfangselement zu richten; und
- eine Auswerteeinheit (400), die ausgebildet ist, von dem Empfangselement empfangenes Licht durchgängig auszuwerten und eine Farbe des Gegenstands zu ermitteln.

2. Vorrichtung (10) nach Anspruch 1,
wobei die Auswerteeinheit ein Filter mit endlicher Impulsantwort verwendet, um die Farbe des Gegenstands zu ermitteln.

3. Vorrichtung (10) nach Anspruch 2,
wobei es sich bei dem Filter mit endlicher Impulsantwort um ein Filter der Ordnung 10 oder größer handelt.

4. Vorrichtung (10) nach einem der vorstehenden Ansprüche,
wobei die Steuereinheit (200) ausgebildet ist, die erste Lichtquelle, die zweite Lichtquelle und die dritte Lichtquelle derart anzusteuern, dass die erste Lichtquelle, die zweite Lichtquelle oder die dritte Lichtquelle eine vierte Pulsgruppe (140) umfassend einen Referenzlichtpuls (141) emittiert, der in zumindest einem vordefinierten Gruppenabstand (150) auf die dritte Pulsgruppe (130) folgt.

5. Vorrichtung nach einem der vorstehenden Ansprüche,
wobei der Taktzyklus zwischen 0,5 µs und 2,0 µs beträgt.

6. Verfahren (1000) zur Ermittlung einer Farbe eines Gegenstands, umfassend die Schritte:
- Ansteuern (1010) einer ersten Lichtquelle, um eine erste Pulsgruppe (110) umfassend mindestens zwei aufeinanderfolgende Lichtpulse (111, 112) mit einem vordefinierten Pulsabstand (115) zueinander zu emittieren;
- Ansteuern (1030) einer zweiten Lichtquelle, um eine zweite Pulsgruppe (120) umfassend mindestens zwei aufeinanderfolgende Lichtpulse (121, 122) mit einem vordefinierten Pulsabstand (125) zueinander zu emittieren;
- Ansteuern (1050) einer dritte Lichtquelle, um eine dritte Pulsgruppe (130) umfassend mindestens zwei aufeinanderfolgende Lichtpulse (131, 132) mit einem vordefinierten Pulsabstand (135) zueinander zu emittieren;
- Ansteuern (1020, 1040) der ersten Lichtquelle, der zweiten Lichtquelle und der dritten Lichtquelle, sodass zwischen der ersten Pulsgruppe (110), der zweiten Pulsgruppe (120) und der dritten Pulsgruppe (130) ein vordefinierter Gruppenabstand (150) liegt, in dem keine der drei Lichtquellen Licht emittiert, wobei der Gruppenabstand mindestens drei Taktzyklen beträgt, der Pulsabstand einen Taktzyklus beträgt und die Pulsdauer einen Taktzyklus beträgt; und
- durchgängiges Auswerten (1080) von von einem Gegenstand remittiertem Licht, um eine Farbe des Gegenstands zu ermitteln.

## Claims

1. An apparatus (10) for determining a color of an object, comprising:
- a transmission unit (100), comprising:
- a light element comprising
- a first light source which is configured to emit light in a predefined wavelength range;
- a second light source which is configured to emit light in a second wavelength range which is different from the first wavelength range; and
- a third light source which is configured to emit light in a third wavelength range which is different from the first wavelength range and from the second wavelength range; and
- a transmission optics which is configured to direct the emitted light from the first light source, the second light source and the third light source onto an object;
- a control unit (200) which is configured to control the first light source, the second light source and the third light source such that the first light source emits a first pulse group (110) comprising at least two consecutive light pulses (111, 112) with a predefined pulse spacing (115) from one another, the second light source emits a second pulse group (120) comprising at least two consecutive light pulses (121, 122) with a predefined pulse spacing (125) from one another, and the third light source emits a third pulse group (130) comprising at least two consecutive light pulses (131, 132) with a predefined pulse spacing (135) from one another, wherein the first pulse group (110), the second pulse group (120) and the third pulse group (130) follow one another at at least one predefined group spacing (150) and none of the three light sources emits light at the predefined group spacing, wherein the group spacing is three clock cycles, the pulse spacing is one clock cycle and the pulse duration is one clock cycle;
- a reception unit (300), comprising
- a reception element; and
- a reception optics which is configured to receive light remitted by the object and to direct it onto the reception element;
and
- an evaluation unit (400) which is configured to continuously evaluate light received by the reception element and to determine a color of the object.

2. An apparatus (10) according to claim 1,
wherein the evaluation unit uses a filter with a finite impulse response to determine the color of the object.

3. An apparatus (10) according to claim 2,
wherein the filter with a finite impulse response is a 10th order filter or greater.

4. An apparatus (10) according to any one of the preceding claims,
wherein the control unit (200) is configured to control the first light source, the second light source and the third light source such that the first light source, the second light source or the third light source emits a fourth pulse group (140) comprising a reference light pulse (141) which follows the third pulse group (130) at at least one predefined group spacing (150).

5. An apparatus according to any one of the preceding claims,
wherein the clock cycle is between 0.5 µs and 2.0 µs.

6. A method (1000) for determining a color of an object, comprising the steps:
- controlling (1010) a first light source to emit a first pulse group (110) comprising at least two consecutive light pulses (111, 112) with a predefined pulse spacing (115) from one another;
- controlling (1030) a second light source to emit a second pulse group (120) comprising at least two consecutive light pulses (121, 122) with a predefined pulse spacing (125) from one another;
- controlling (1050) a third light source to emit a third pulse group (130) comprising at least two consecutive light pulses (131, 132) with a predefined pulse spacing (135) from one another;
- controlling (1020, 1040) the first light source, the second light source and the third light source so that between the first pulse group (110), the second pulse group (120) and the third pulse group (130) there is a predefined group spacing (150) at which none of the three light sources emits light, wherein the group spacing is at least three clock cycles, the pulse spacing is one clock cycle and the pulse duration is one clock cycle; and
- continuously evaluating (1080) light remitted by an object to determine a color of the object.

## Revendications

1. Dispositif (10) de détermination d'une couleur d'un objet, comprenant :
- une unité d'émission (100), comprenant :
- un élément lumineux, comprenant
- une première source de lumière conçue pour émettre de la lumière dans une première plage de longueurs d'onde prédéfinie,
- une deuxième source de lumière conçue pour émettre de la lumière dans une deuxième plage de longueurs d'onde différente de la première plage de longueurs d'onde, et
- une troisième source de lumière conçue pour émettre de la lumière dans une troisième plage de longueurs d'onde différente de la première plage de longueurs d'onde et de la deuxième plage de longueurs d'onde ; et
- une optique d'émission conçue pour diriger la lumière, émise par la première source de lumière, par la deuxième source de lumière et par la troisième source de lumière, vers un objet ;
- une unité de commande (200) conçue pour commander la première source de lumière, la deuxième source de lumière et la troisième source de lumière de telle sorte que la première source de lumière émet un premier groupe d'impulsions (110), comprenant au moins deux impulsions lumineuses successives (111, 112) avec un intervalle d'impulsions prédéfini (115) entre elles, que la deuxième source de lumière émet un deuxième groupe d'impulsions (120), comprenant au moins deux impulsions lumineuses successives (121, 122) avec un intervalle d'impulsions prédéfini (125) entre elles, et que la troisième source de lumière émet un troisième groupe d'impulsions (130), comprenant au moins deux impulsions lumineuses successives (131, 132) avec un intervalle d'impulsions prédéfini (135) entre elles, sachant que le premier groupe d'impulsions (110), le deuxième groupe d'impulsions (120) et le troisième groupe d'impulsions (130) se succèdent avec au moins un intervalle de groupes prédéfini (150), et que dans l'intervalle de groupes prédéfini, aucune des trois sources de lumière n'émet de lumière, l'intervalle de groupes s'élève à trois cycles d'horloge, l'intervalle d'impulsions s'élève à un cycle d'horloge, et la durée d'impulsion s'élève à un cycle d'horloge ;
- une unité de réception (300), comprenant
- un élément de réception ; et
- une optique de réception conçue pour recevoir la lumière renvoyée par l'objet et pour la diriger sur l'élément de réception ;
et
- une unité d'évaluation (400) conçue pour évaluer en continu la lumière reçue par l'élément de réception et pour déterminer une couleur de l'objet.

2. Dispositif (10) selon la revendication 1,
dans lequel l'unité d'évaluation utilise un filtre à réponse impulsionnelle finie afin de déterminer la couleur de l'objet.

3. Dispositif (10) selon la revendication 2,
dans lequel le filtre à réponse impulsionnelle finie est un filtre d'ordre 10 ou plus.

4. Dispositif (10) selon l'une des revendications précédentes,
dans lequel l'unité de commande (200) est conçue pour commander la première source de lumière , la deuxième source de lumière et la troisième source de lumière de telle sorte que la première source de lumière, la deuxième source de lumière ou la troisième source de lumière émet un quatrième groupe d'impulsions (140) comprenant une impulsion lumineuse de référence (141) qui suit le troisième groupe d'impulsions (130) avec au moins un intervalle de groupes prédéfini (150).

5. Dispositif selon l'une des revendications précédentes,
dans lequel le cycle d'horloge est compris entre 0,5 µs et 2,0 µs.

6. Procédé (1000) de détermination d'une couleur d'un objet, comprenant les étapes consistant à :
- commander (1010) une première source de lumière pour émettre un premier groupe d'impulsions (110) comprenant au moins deux impulsions lumineuses successives (111, 112) avec un intervalle d'impulsions prédéfini (115) entre elles ;
- commander (1030) une deuxième source de lumière pour émettre un deuxième groupe d'impulsions (120) comprenant au moins deux impulsions lumineuses successives (121, 122) avec un intervalle d'impulsions prédéfini (125) entre elles ;
- commander (1050) une troisième source de lumière pour émettre un troisième groupe d'impulsions (130) comprenant au moins deux impulsions lumineuses successives (131, 132) avec un intervalle d'impulsions prédéfini (135) entre elles ; et
- commander (1020, 1040) la première source de lumière, la deuxième source de lumière et la troisième source de lumière de telle sorte qu'un intervalle de groupes prédéfini (150) se situe entre le premier groupe d'impulsions (110), le deuxième groupe d'impulsions (120) et le troisième groupe d'impulsions (130), intervalle dans lequel aucune des trois sources de lumière n'émet de lumière, sachant que l'intervalle de groupes s'élève à au moins de trois cycles d'horloge, l'intervalle d'impulsions s'élève à un cycle d'horloge et la durée d'impulsion s'élève à un cycle d'horloge ; et
- évaluer en continu (1080) la lumière renvoyée par un objet, afin de déterminer une couleur de l'objet.
